# EUROPÄISCHE PATENTSCHRIFT

(11) **EP 3 821 217 B1**
(45) Veröffentlichungstag und Bekanntmachung des Hinweises auf die Patenterteilung: **28.09.2022**
(21) Anmeldenummer: 19761759.0
(22) Anmeldetag: 14.08.2019
(51) Int. Cl.: G01K 1/02, G01K 13/08

(54) **ELEKTRISCHE MASCHINE MIT SCHUTZTRENNUNGSMODUL**
ELECTRIC MACHINE WITH PROTECTIVE SEPARATION MODULE
MACHINE ÉLECTRIQUE AVEC MODULE DE SÉPARATION DE PROTECTION

(30) Priorität: 31.08.2018 EP 18192046
(43) Veröffentlichungstag der Anmeldung: 19.05.2021
(73) Patentinhaber: WEISS Spindeltechnologie GmbH, 96126 Maroldsweisach (DE)
(72) Erfinder: MEDLA, Norbert, 91341 Röttenbach (DE); BUTZ, Felix, 97421 Schweinfurt (DE); WÖHNING, Michael, 97461 Hofheim (DE)
(74) Vertreter: Maier, Daniel Oliver
(86) Internationale Anmeldenummer: PCT/EP2019/071810
(87) Internationale Veröffentlichungsnummer: WO 2020/043492

(56) Entgegenhaltungen:
- DE-A1-102007 039 951
- DE-A1-102014 203 509
- DE-A1-102017 111 767
- DE-B4-102007 039 951
- DE-B4-102014 203 509
- US-A1- 2014 023 110
- US-A1- 2015 063 417

## Beschreibung

Die Erfindung betrifft eine elektrische Maschine umfassend ein Maschinengehäuse, wenigstens einen Temperatursensor zur Erzeugung eines elektrischen Sensorsignals als Maß für eine Maschinentemperatur der elektrischen Maschine und ein in dem Maschinengehäuse angeordnetes Schutztrennungsmodul.

Um die Maschinentemperatur einer elektrischen Maschine zu überwachen, wird häufig ein elektrischer oder elektronischer Temperatursensor verwendet, der in einer Maschinenwicklung der elektrischen Maschine verbaut wird. In einem Fehlerfall kann von der Maschinenwicklung zu dem Stromkreis des Temperatursensors ein Spannungsüberschlag erfolgen, der eine Überspannung in dem Stromkreis des Temperatursensors verursacht.

Aus der DE 10 2014 203 509 A1 ist ein Steuergerät zum Ansteuern eines Elektromotors bekannt, der mindestens einen Temperatursensor aufweist, der eine Motortemperatur erfasst. Das Steuergerät weist eine Motortemperaturmesseinrichtung auf, die einen Oszillator zum Erzeugen eines Oszillatorsignals, einen Transformator mit einer Primärwicklung und einer von der Primärwicklung galvanisch getrennten Sekundärwicklung aufweist, wobei die Primärwicklung mit dem Oszillatorsignal beaufschlagt ist. Eine Sensoransteuersignalerzeugungseinrichtung ist dazu ausgebildet ist, aus einem an der Sekundärwicklung anstehenden Signal ein Sensoransteuersignal zu erzeugen. Weiter ist ein Temperatursensoranschluss vorgesehen, an dem das Sensoransteuersignal ausgegeben wird und der zum Anschluss des Temperatursensors vorgesehen ist. Eine Auswerteeinrichtung ist dazu ausgebildet, einen durch die Primärwicklung fließenden Strom und/oder eine an der Primärwicklung anstehende Spannung zum Messen der Motortemperatur auszuwerten.

Aus der DE 10 2007 039 951 A1 ist eine elektrische Schaltungsanordnung umfassend ein Schaltmodul mit integriertem Temperatursensor zur Erfassung der Temperatur des Schaltmoduls bekannt, wobei ein Modulator umfasst ist, welcher ein nach Maßgabe einer mittels des Temperatursensors ermittelten Temperaturänderung moduliertes Ausgangssignal erzeugt.

Der Erfindung liegt die Aufgabe zugrunde, Gefahren für Bediener und die Peripherie einer elektrischen Maschine zu reduzieren, die von Überspannungen in einem Stromkreis eines in der elektrischen Maschine verbauten Temperatursensors verursacht werden können.

Die Aufgabe wird erfindungsgemäß durch eine elektrischen Maschine mit den Merkmalen des Anspruchs 1 gelöst.

Vorteilhafte Ausgestaltungen der Erfindung sind Gegenstand der abhängigen Ansprüche.

Dabei ist ein Schutztrennungsmodul für eine elektrische Maschine vorgesehen, die ein Maschinengehäuse und wenigstens einen Temperatursensor zur Erzeugung eines elektrischen Sensorsignals als Maß für eine Maschinentemperatur der elektrischen Maschine aufweist. Das Schutztrennungsmodul ist in das Maschinengehäuse einbaubar und weist eine mit dem wenigstens einen Temperatursensor elektrisch verbindbare Eingangsschnittstelle zum Empfang des von dem Temperatursensor erzeugten Sensorsignals und eine Ausgangsschnittstelle, die von der Eingangsschnittstelle galvanisch getrennt ist, auf. Über die Ausgangsschnittstelle wird für jedes von der Eingangsschnittstelle empfangene Sensorsignal ein das Sensorsignal nachbildende Ausgangssignal ausgegeben.

Das Schutztrennungsmodul ermöglicht über die Ausgangsschnittstelle die Ausgabe von Ausgangssignalen, die den Sensorsignalen des wenigstens einen Temperatursensors nachgebildet sind. Durch die galvanische Trennung der Eingangsschnittstelle von der Ausgangsschnittstelle ist die Ausgangsschnittstelle von möglichen Spannungsüberschlägen von der Maschinenwicklung der elektrischen Maschine in den Sensorstromkreis des Temperatursensors elektrisch sicher getrennt. Dadurch, dass die von der Ausgangsschnittstelle ausgegebenen Ausgangssignale den Sensorsignalen nachgebildet sind, können üblicherweise zum Auslesen der Sensorsignale verwendete elektrische Verbindungselemente wie Kabel und Stecker auch zum Auslesen der Ausgangssignale verwendet werden, so dass keine speziellen Verbindungselemente erforderlich sind. Für einen Benutzer der elektrischen Maschine ist das Schutztrennungsmodul daher transparent, das heißt der Benutzer kann die elektrische Maschine wie eine herkömmliche elektrische Maschine, die das Schutztrennungsmodul nicht aufweist, verwenden, ohne zusätzliche externe Komponenten zu benötigen oder weitere Maßnahmen durchführen zu müssen.

Eine Ausgestaltung der Erfindung sieht vor, dass das Schutztrennungsmodul wenigstens einen Optokoppler zur galvanischen Trennung der Eingangsschnittstelle und der Ausgangsschnittstelle und zur Signalübertragung zwischen der Eingangsschnittstelle und der Ausgangsschnittstelle aufweist. Ein Optokoppler ermöglicht die optische Übertragung eines elektrischen Signals zwischen galvanisch getrennten Stromkreisen und eignet sich daher insbesondere vorteilhaft zur Übertragung eines Sensorsignals von der Eingangsschnittstelle zu der Ausgangsschnittstelle des Schutztrennungsmoduls bei galvanischer Trennung der beiden Schnittstellen.

Alternativ oder zusätzlich kann das Schutztrennungsmodul wenigstens eine elektronische Schaltung zur galvanischen Trennung der Eingangsschnittstelle und der Ausgangsschnittstelle und zur Signalübertragung zwischen der Eingangsschnittstelle und der Ausgangsschnittstelle aufweisen.

Eine weitere Ausgestaltung der Erfindung sieht vor, dass das Schutztrennungsmodul eine Versorgungsschnittstelle aufweist, über die das Schutztrennungsmodul aus einer Stromversorgung eines Drehgebers für die elektrische Maschine mit elektrischer Energie versorgbar ist. Diese Ausgestaltung der Erfindung nutzt aus, dass viele elektrische Maschinen mit Drehgebern verbindbar sind, und ermöglicht, das Schutztrennungsmodul aus der Stromversorgung eines Drehgebers für die elektrische Maschine mit elektrischer Energie zu versorgen. Dadurch wird keine separate beziehungsweise zusätzliche Spannungsversorgung für das Schutztrennungsmodul benötigt.

Eine weitere Ausgestaltung der Erfindung sieht vor, dass die Eingangsschnittstelle des Schutztrennungsmoduls Eingänge für verschiedene Arten von Temperatursensoren aufweist. Dadurch kann das Schutztrennungsmodul vorteilhaft für verschiedene Arten von Temperatursensoren verwendet und somit flexibel eingesetzt werden.

Eine erfindungsgemäße elektrische Maschine umfasst ein Maschinengehäuse, wenigstens einen Temperatursensor, insbesondere wenigstens einen in einer Maschinenwicklung der elektrischen Maschine verbauten Temperatursensor, zur Erzeugung eines elektrischen Sensorsignals als Maß für eine Maschinentemperatur der elektrischen Maschine und ein in dem Maschinengehäuse angeordnetes erfindungsgemäßes Schutztrennungsmodul, dessen Eingangsschnittstelle mit dem wenigstens einen Temperatursensor elektrisch verbunden ist. Die Vorteile einer derartigen elektrischen Maschine entsprechen den oben bereits genannten Vorteilen eines Schutztrennungsmoduls und werden daher hier nicht noch einmal wiederholt.

Eine erfindungsgemäße Motorspindel weist einen Elektromotor auf, der als eine erfindungsgemäße elektrische Maschine ausgebildet ist. Motorspindeln weisen häufig eine besonders kompakte Bauform auf und werden mit hohen Leistungen betrieben. Deshalb muss der Motor einer Motorspindel in der Regel ausreichend gekühlt werden und seine Motortemperatur muss überwacht werden, um eine Überhitzung des Motors zu verhindern. Elektromotoren von Motorspindeln weisen daher häufig Temperatursensoren zur Überwachung der Motortemperaturen auf. Eine erfindungsgemäße elektrische Maschine eignet sich daher insbesondere als Elektromotor für eine Motorspindel.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm einer mit einer Steuerungselektronik verbundenen elektrischen Maschine und
- FIG 2: eine Schnittdarstellung einer elektrischen Maschine.

Einander entsprechende Teile sind in den Figuren mit denselben Bezugszeichen versehen.

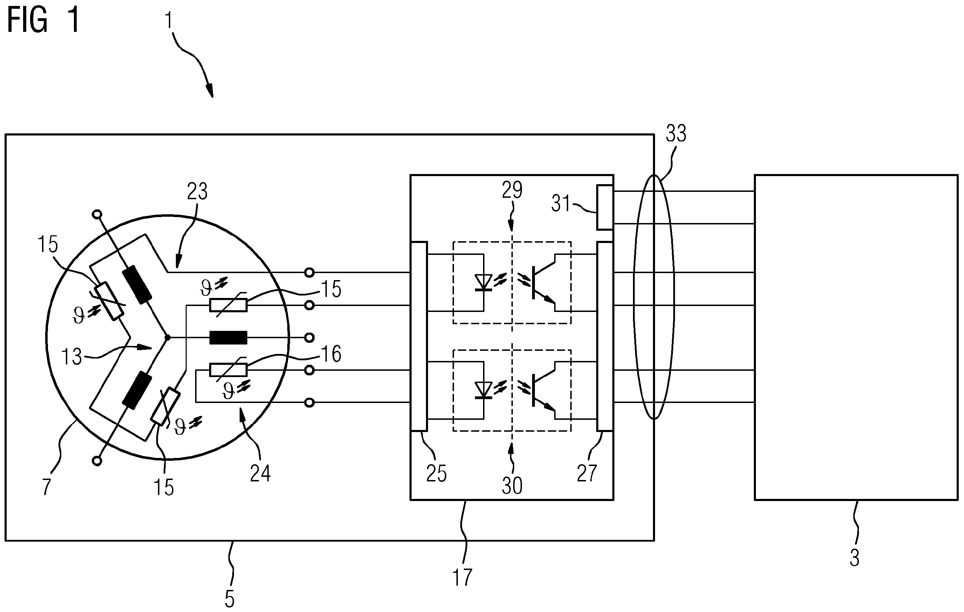

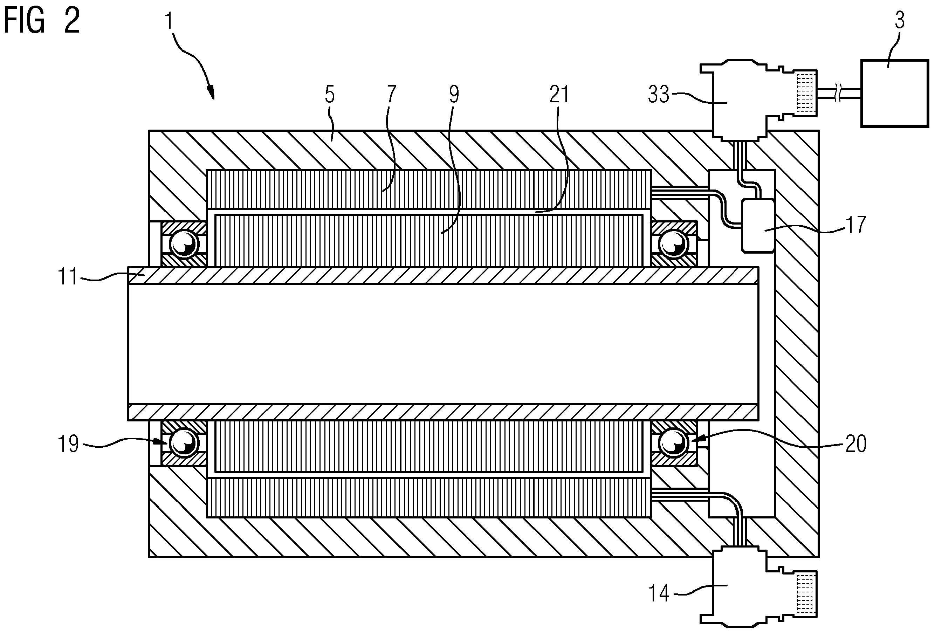

Die Figuren 1 und 2 zeigen ein Ausführungsbeispiel einer erfindungsgemäßen elektrischen Maschine 1. Figur 1 zeigt ein Blockdiagramm der elektrischen Maschine 1, Figur 2 zeigt eine Schnittdarstellung der elektrischen Maschine 1. Figur 1 zeigt zudem eine Steuerungselektronik 3, mit der die elektrische Maschine 1 verbunden ist.

Die elektrische Maschine 1 weist ein Maschinengehäuse 5, einen Stator 7, einen Rotor 9, eine Maschinenwelle 11, eine dreiphasige Maschinenwicklung 13, Temperatursensoren 15, 16 und ein Ausführungsbeispiel eines erfindungsgemäßen Schutztrennungsmoduls 17 auf. Die elektrische Maschine 1 ist beispielsweise als ein Elektromotor einer Motorspindel ausgebildet, deren Spindelwelle die Maschinenwelle 11 ist.

Der Stator 7, der Rotor 9 und das Schutztrennungsmodul 17 sind in dem Maschinengehäuse 5 angeordnet. Die Maschinenwelle 11 ragt aus dem Maschinengehäuse 5 heraus und ist durch zwei Wellenlager 19, 20 drehbar an dem Maschinengehäuse 5 gelagert. Der Rotor 9 verläuft ringförmig um die Maschinenwelle 11 und ist starr mit der Maschinenwelle 11 verbunden. Der Stator 7 weist ein Blechpaket auf, das durch einen Luftspalt 21 von dem Rotor 9 beabstandet ringförmig um den Rotor 9 herum angeordnet ist und (nicht näher dargestellte) Nuten aufweist, durch die die Maschinenwicklung 13 verläuft. Die Maschinenwicklung 13 ist mit einem Leistungsanschluss 14 der elektrischen Maschine 1 verbunden.

Die Temperatursensoren 15, 16 sind als elektrische oder elektronische Sensoren zum Erzeugen elektrischer Sensorsignale als Maß für eine Maschinentemperatur der elektrischen Maschine 1 ausgebildet und in der Maschinenwicklung 13 verbaut. In dem dargestellten Ausführungsbeispiel sind drei gleichartige erste Temperatursensoren 15 in einem gemeinsamen ersten Sensorstromkreis 23 angeordnet. Ein weiterer Temperatursensor 16 ist in einem zweiten Sensorstromkreis 24 angeordnet. Die ersten Temperatursensoren 15 unterscheiden sich von dem zweiten Temperatursensor 16, beispielsweise hinsichtlich ihrer Messbereiche. Beispielsweise weisen die Temperatursensoren 15, 16 jeweils einen temperaturabhängigen elektrischen Widerstand auf, wobei sich der Nennwert der elektrischen Widerstände der ersten Temperatursensoren 15 von dem Nennwert des elektrischen Widerstands des zweiten Temperatursensors 16 unterscheidet.

Das Schutztrennungsmodul 17 weist eine mit beiden Sensorstromkreisen 23, 24 elektrisch verbundene Eingangsschnittstelle 25 zum Empfang der von den Temperatursensoren 15, 16 erzeugten Sensorsignale und eine von der Eingangsschnittstelle 25 galvanisch getrennte Ausgangsschnittstelle 27 auf. Das Schutztrennungsmodul 17 ist dazu ausgebildet, für jedes von der Eingangsschnittstelle 25 empfangene Sensorsignal ein das Sensorsignal nachbildendes Ausgangssignal zu erzeugen und über die Ausgangsschnittstelle 27 auszugeben. Zum galvanischen Trennen der Eingangsschnittstelle 25 und der Ausgangsschnittstelle 27 sowie zum Erzeugen der Ausgangssignale aus den von der Eingangsschnittstelle 25 empfangenen Sensorsignalen weist das Schutztrennungsmodul 17 für jeden Sensorstromkreis 23, 24 einen Optokoppler 29, 30 auf, der die Eingangsschnittstelle 25 mit der Ausgangsschnittstelle 27 verbindet und das jeweilige Ausgangssignal erzeugt und an die Ausgangsschnittstelle 27 überträgt. Statt Optokopplern 29, 30 können auch andere Baugruppen, beispielsweise elektronische Schaltungen, zur galvanischen Trennung der Eingangsschnittstelle 25 und der Ausgangsschnittstelle 27 und zur Signalübertragung zwischen der Eingangsschnittstelle 25 und der Ausgangsschnittstelle 27 vorgesehen sein.

Das Schutztrennungsmodul 17 weist ferner eine Versorgungsschnittstelle 31 auf, über die es mit elektrischer Energie versorgbar ist. Insbesondere kann das Schutztrennungsmodul 17 aus einer Stromversorgung eines Drehgebers für die elektrische Maschine 1 mit elektrischer Energie versorgbar sein. Die Ausgangsschnittstelle 27 und die Versorgungsschnittstelle 31 sind mit einer Anschlusseinheit 33 der elektrischen Maschine 1 elektrisch verbunden, über die die elektrische Maschine 1 mit der Steuerungselektronik 3 elektrisch verbindbar ist. Die Steuerungselektronik 3 ist insbesondere dazu ausgebildet, die von der Ausgangsschnittstelle 27 über die Anschlusseinheit 33 ausgegebenen Ausgangssignale auszulesen und auszuwerten.

Das Schutztrennungsmodul 17 ermöglicht durch die galvanische Trennung der Eingangsschnittstelle 25 von der Ausgangsschnittstelle 27 eine sichere elektrische Schutztrennung der Ausgangsschnittstelle 27 von möglichen Spannungsüberschlägen von der Maschinenwicklung 13 in die Sensorstromkreise 23, 24. Dadurch, dass die von der Ausgangsschnittstelle 27 ausgegebenen Ausgangssignale den Sensorsignalen nachgebildet sind, können üblicherweise zum Auslesen der Sensorsignale verwendete elektrische Verbindungselemente wie Kabel und Stecker auch zum Auslesen der von der Ausgangsschnittstelle 27 ausgegebenen Ausgangssignale verwendet werden, so dass keine speziellen Verbindungselemente erforderlich sind.

Für einen Benutzer der elektrischen Maschine 1 ist das Schutztrennungsmodul 17 daher transparent, das heißt der Benutzer kann die elektrische Maschine 1 wie eine herkömmliche elektrische Maschine, die das Schutztrennungsmodul nicht aufweist, verwenden.

## Patentansprüche

1. Elektrische Maschine (1), umfassend
- ein Maschinengehäuse (5),
- wenigstens einen Temperatursensor (15, 16) zur Erzeugung eines elektrischen Sensorsignals als Maß für eine Maschinentemperatur der elektrischen Maschine (1) und
- ein in dem Maschinengehäuse (5) angeordnetes Schutztrennungsmodul (17),
- wobei das Schutztrennungsmodul (17) in das Maschinengehäuse (5) eingebaut ist, wobei das Schutztrennungsmodul (17) eine mit dem wenigstens einen Temperatursensor (15, 16) elektrisch verbindbare Eingangsschnittstelle (25) zum Empfang des von dem Temperatursensor (15, 16) erzeugten Sensorsignals und eine Ausgangsschnittstelle (27), die von der Eingangsschnittstelle (25) galvanisch getrennt ist, und eine Versorgungsschnittstelle (31) aufweist, über die das Schutztrennungsmodul (17) aus einer Stromversorgung für die elektrische Maschine (1) mit elektrischer Energie versorgbar ist,
- wobei über die Ausgangsschnittstelle (27) für jedes von der Eingangsschnittstelle (25) empfangene Sensorsignal ein das Sensorsignal nachbildende Ausgangssignal an eine Steuerungselektronik (3) ausgebbar ist,
- wobei das Ausgangssignal aus dem Sensorsignal derart nachgebildet ist, in die Steuerungselektronik (3) über die Ausgangsschnittstelle (27) zur Steuerungselektronik (3) ausgelesen und in der Steuerungselektronik (3) ausgewertet zu werden,
- wobei das Schutztrennungsmodul (17) durch die galvanische Trennung der Eingangsschnittstelle (25) von der Ausgangsschnittstelle (27) zur Ermöglichung einer sicheren elektrische Schutztrennung der Ausgangsschnittstelle (27) von möglichen Spannungsüberschlägen einer Maschinenwicklung (13) im Sensorstromkreis (23, 24) vorgesehen ist,
- wobei die Ausgangsschnittstelle (27) und die Versorgungsschnittstelle (31) mit einer Anschlusseinheit (33) der elektrischen Maschine (1) elektrisch verbindbar sind, über die die elektrische Maschine (1) mit der Steuerungselektronik (3) elektrisch verbindbar ist und
- wobei die von der Ausgangsschnittstelle (27) ausgegebenen Ausgangssignale den Sensorsignalen nachgebildet sind, so dass zum Auslesen der Sensorsignale verwendete elektrische Verbindungselemente auch zum Auslesen der von der Ausgangsschnittstelle (27) ausgegebenen Ausgangssignalen verwendbar sind, ohne dass spezielle Verbindungselemente erforderlich sind.

2. Elektrische Maschine (1) nach Anspruch 1, weiter umfassend die Steuerungselektronik (3), wobei die Steuerungselektronik (3) dazu ausgebildet ist, die von der Ausgangsschnittstelle (27) über die Anschlusseinheit (33) ausgegebenen Ausgangssignale auszulesen und auszuwerten.

3. Elektrische Maschine (1)nach einem der Ansprüche 1 oder 2, das wenigstens einen Optokoppler (29, 30) zur galvanischen Trennung der Eingangsschnittstelle (25) und der Ausgangsschnittstelle (27) und zur Signalübertragung zwischen der Eingangsschnittstelle (25) und der Ausgangsschnittstelle (27) aufweist.

4. Elektrische Maschine (1)nach einem der Ansprüche 1 bis 3, das wenigstens eine elektronische Schaltung zur galvanischen Trennung der Eingangsschnittstelle (25) und der Ausgangsschnittstelle (27) und zur Signalübertragung zwischen der Eingangsschnittstelle (25) und der Ausgangsschnittstelle (27) aufweist.

5. Elektrische Maschine (1) nach einem der vorhergehenden Ansprüche, wobei (31), das Schutztrennungsmodul (17) aus einer Stromversorgung eines Drehgebers für die elektrische Maschine (1) mit elektrischer Energie versorgbar ist.

6. Elektrische Maschine (1) nach einem der vorhergehenden Ansprüche, wobei die Eingangsschnittstelle (25) Eingänge für verschiedene Arten von Temperatursensoren (15, 16) aufweist.

7. Elektrische Maschine (1) nach einem der vorhergehenden Ansprüche, wobei wenigstens ein Temperatursensor (15, 16) in einer Maschinenwicklung (13) der elektrischen Maschine (1) verbaut ist.

8. Elektrische Maschine (1) nach einem der vorhergehenden Ansprüche, wobei über die Ausgangsschnittstelle (27) für jedes von der Eingangsschnittstelle (25) empfangene Sensorsignal ein das Sensorsignal nachbildende Ausgangssignal an eine Steuerungselektronik (3) ausgebbar ist, wobei die Steuerungselektronik (3) dazu ausgebildet ist, die von der Ausgangsschnittstelle (27) ausgegebenen Ausgangssignale auszulesen und auszuwerten.

9. Elektrische Maschine (1) nach einem der vorhergehenden Ansprüche, wobei für einen Benutzer der elektrischen Maschine (1) das Schutztrennungsmodul (17) transparent ist, so dass die elektrische Maschine (1) vom Benutzer wie eine herkömmliche elektrische Maschine, die das Schutztrennungsmodul (17) nicht aufweist, verwendbar ist.

10. Motorspindel mit einem Elektromotor, der als eine elektrische Maschine (1) nach einem der vorhergehenden Ansprüche ausgebildet ist.

## Claims

1. Electric machine (1), comprising
- a machine housing (5),
- at least one temperature sensor (15, 16) for generating an electrical sensor signal as a measure of a machine temperature of the electric machine (1) and
- a protective isolation module (17) that is arranged in the machine housing (5),
- wherein the protective isolation module (17) is built into the machine housing (5), wherein the protective isolation module (17) has an input interface (25), which can be electrically connected to the at least one temperature sensor (15, 16) to receive the sensor signals generated by the temperature sensor (15, 16), and has an output interface (27), which is galvanically isolated from the input interface (25), and a supply interface (31), via which the protective isolation module (17) can be supplied with electrical energy from a power supply for the electric machine (1),
- wherein an output signal that replicates the sensor signal can be output to an electronic control system (3) via the output interface (27) for each sensor signal received by the input interface (25),
- wherein the output signal replicates the sensor signal in such a manner that it is read into the electronic control system (3) via the output interface (27) to the electronic control system (3) and evaluated in the electronic control system (3),
- wherein the protective isolation module (17), due to the galvanic isolation of the input interface (25) from the output interface (27), is provided to enable a secure electrical protective isolation of the output interface (27) from possible voltage flashovers of a machine winding (13) in the sensor power circuit (23, 24),
- wherein the output interface (27) and the supply interface (31) can be electrically connected to a connection unit (33) of the electric machine (1), via which the electric machine (1) can be electrically connected to the electronic control system (3) and
- wherein the output signals output by the output interface (27) replicate the sensor signals, so that electrical connecting elements used for reading the sensor signals may also be used for reading the output signals output by the output interface (27), without specific connecting elements being required.

2. Electric machine (1) according to claim 1, further comprising the electronic control system (3),
wherein the electronic control system (3) is embodied to read and evaluate the output signals output by the output interface (27) via the connection unit (33).

3. Electric machine (1) according to one of claims 1 or 2, which has at least one optocoupler (29, 30) for galvanically isolating the input interface (25) and the output interface (27) and for transferring signals between the input interface (25) and the output interface (27).

4. Electric machine (1) according to one of claims 1 to 3, which has at least one electronic circuit for galvanically isolating the input interface (25) and the output interface (27) and for transferring signals between the input interface (25) and the output interface (27).

5. Electric machine (1) according to one of the preceding claims, wherein (31) the protective isolation module (17) may be supplied with electrical energy from a power supply of a rotary encoder for the electrical machine (1).

6. Electric machine (1) according to one of the preceding claims, wherein the input interface (25) has inputs for various kinds of temperature sensors (15, 16).

7. Electric machine (1) according to one of the preceding claims, wherein at least one temperature sensor (15, 16) is installed in a machine winding (13) of the electric machine (1) .

8. Electric machine (1) according to one of the preceding claims, wherein an output signal that replicates the sensor signal can be output to an electronic control system (3) via the output interface (27) for each sensor signal received by the input interface (25), wherein the electronic control system (3) is embodied to read and evaluate the output signals output by the output interface (27).

9. Electric machine (1) according to one of the preceding claims, wherein the protective isolation module (17) is transparent for a user of the electric machine (1), so that the electric machine (1) may be used by the user as they would a conventional electric machine that does not have the protective isolation module (17).

10. Motor spindle with an electric motor, which is embodied as an electric machine (1) according to one of the preceding claims.

## Revendications

1. Machine (1) électrique, comprenant
- une carcasse (5) de machine,
- au moins une sonde (15, 16) de température de production d'un signal électrique de sonde comme mesure d'une température de la machine (1) électrique et
- un module (17) de séparation de protection disposé dans la carcasse (5) de la machine,
- dans laquelle le module (17) de séparation de protection est monté dans la carcasse (5) de la machine, dans laquelle le module (17) de séparation de protection a une interface (25) d'entrée, pouvant être reliée électriquement à la au moins une sonde (15, 16) de température, pour la réception du signal de sonde produit par la sonde (15, 16) de température et une interface (27) de sortie, qui est séparée galvaniquement de l'interface (25) d'entrée, et une interface (31) d'alimentation, par laquelle le module (17) de séparation de protection peut être alimenté en énergie électrique à partir d'une alimentation en courant de la machine (1) électrique,
- dans laquelle, par l'interface (27) de sortie, pour chaque signal de la sonde reçu par l'interface (25) d'entrée, un signal de sortie reproduisant le signal de la sonde peut être envoyé à une électronique (3) de commande,
- dans laquelle le signal de sortie est reproduit à partir du signal de la sonde, de manière à être lu dans l'électronique (3) de commande, par l'intermédiaire de l'interface (27) de sortie avec l'électronique (3) de commande, et à être analysé dans l'électronique (3) de commande,
- dans laquelle le module (17) de séparation de protection est, par la séparation galvanique de l'interface (25) d'entrée de l'interface (27) de sortie, prévue pour permettre une séparation de protection électrique sûre de l'interface (27) de sortie vis-à-vis d'éventuelles surcharges de tension d'un enroulement (13) de machine du circuit (23, 24) de la sonde,
- dans laquelle l'interface (27) de sortie et l'interface (31) d'alimentation peuvent être reliées électriquement à une unité (33) de connexion de la machine (1) électrique, par laquelle la machine (1) électrique peut être reliée électriquement à l'électronique (3) de commande et
- dans laquelle les signaux de sortie envoyés par l'interface (27) de sortie sont reproduits en les signaux de la sonde de sorte que les éléments de liaison électriques, utilisés pour la lecture des signaux de la sonde, peuvent être utilisés aussi pour la lecture des signaux de sortie envoyés par l'interface (27) de sortie sans avoir besoin d'éléments de liaison spéciaux.

2. Machine (1) électrique suivant la revendication 1, comprenant en outre l'électronique (3) de commande,
dans laquelle l'électronique (3) de commande est constituée pour lire et analyser les signaux de sortie envoyés de l'interface (27) de sortie par l'intermédiaire de l'unité (33) de connexion.

3. Machine (1) électrique suivant l'une des revendications 1 ou 2, qui a au moins un optocoupleur (29, 30) de séparation galvanique de l'interface (25) d'entrée et de l'interface (27) de sortie et de transmission du signal entre l'interface (25) d'entrée et l'interface (27) de sortie.

4. Machine (1) électrique suivant l'une des revendications 1 à 3, qui a au moins un circuit électronique de séparation galvanique de l'interface (25) d'entrée et de l'interface (27) de sortie et de transmission du signal entre l'interface (25) d'entrée et l'interface (27) de sortie.

5. Machine (1) électrique suivant l'une des revendications précédentes, dans laquelle (31) le module (17) de séparation de protection peut être alimenté en énergie électrique à partir d'une alimentation en courant d'un encodeur de la machine (1) électrique.

6. Machine (1) électrique suivant l'une des revendications précédentes, dans laquelle l'interface (25) d'entrée à des entrées pour des divers types de sondes (15, 16) de température.

7. Machine (1) électrique suivant l'une des revendications précédentes, dans laquelle au moins une sonde (15, 16) de température est posée dans un enroulement (13) de la machine (1) électrique.

8. Machine (1) électrique suivant l'une des revendications précédentes, dans laquelle, par l'interface (27) de sortie, pour chaque signal de la sonde reçu par l'interface (25) d'entrée, un signal de sortie reproduisant le signal de la sonde peut être envoyé à une électronique (3) de commande, l'électronique (3) de commande étant constituée pour lire et analyser les signaux de sortie envoyés par l'interface (27) de sortie.

9. Machine (1) électrique suivant l'une des revendications précédentes, dans laquelle le module (17) de séparation de protection est transparent pour un utilisateur de la machine (1) électrique, de manière à ce que la machine (1) électrique puisse être utilisée par les utilisateurs comme une machine électrique habituelle, qui n'a pas le module (17) de séparation de protection.

10. Arbre de moteur comprenant un moteur électrique, qui est constitué sous la forme d'une machine (1) électrique suivant l'une des revendications précédentes.
